(19) Europäisches Patentamt
European Patent Office
Office européen des brevets

(11) EP 1 918 674 B1

# (12) EUROPEAN PATENT SPECIFICATION

(45) Date of publication and mention of the grant of the patent:
**11.09.2013 Bulletin 2013/37**

(51) Int Cl.:
***G06F 3/0354*** *(2013.01)* ***G06F 3/03*** *(2006.01)*
***G01B 11/16*** *(2006.01)*

(21) Application number: **06022959.8**

(22) Date of filing: **03.11.2006**

(54) **Device and method for capturing speckles**

Vorrichtung und Verfahren zur Erfassung von Speckeln

Dispositif et procédé de capture de tavelures

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**07.05.2008 Bulletin 2008/19**

(73) Proprietor: **Chung Shan Institute of Science and Technology**
**Taoyuan County (TW)**

(72) Inventors:
- **Hwang, Yi Yuh**
  **Taoyuan City**
  **Taoyuan County**
  **Taiwan (TW)**
- **Chen, Ming**
  **Lung-Tan**
  **Taoyuan,**
  **Taiwan (TW)**
- **Wang, Mau Ran**
  **Sinyi District**
  **Taipei City**
  **Taiwan (TW)**
- **Huang, Wen Chen**
  **Neihu District,**
  **Taipei City,**
  **Taiwan (TW)**
- **Ma, Shin I**
  **Lung-Tan**
  **Taoyuan**
  **Taiwan (TW)**

(74) Representative: **Kador & Partner**
**Corneliusstrasse 15**
**80469 München (DE)**

(56) References cited:
**EP-A1- 1 586 982** **WO-A-2005/114100**
**US-A- 4 794 384** **US-A1- 2005 258 347**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## BACKGROUND OF THE INVENTION

### Field of the Invention

The present invention relates to the application of relative motion detection utilizing a coherent light source and improved speckle pattern imaging configuration and technique.

### Background of the Invention

Laser is a light source with high coherence. When two beams of high coherence meet within the coherent length, they will interfere with each other. There are constructive and destructive interferences, where the former produces bright fringes while the latter produces dark fringes. Therefore, the interference between two coherent light beams often produces a pattern with alternating bright and dark fringes. Moreover, the interference is related to the wavelength of the light. When two beams overlap, a destructive interference occurs if the phase difference is half the wavelength, whereas a constructive interference occurs if the phase difference is an integer multiple of the wavelength. As a result, the detecting precision is half of a wavelength. Since the wavelength of the laser light is fairly short (for example, the wavelengths of visible light range from 0.3 to 0.7$\mu$ m), the half-wavelength precision is very sensitive. Therefore, interference effect has a number of applications.

When a highly coherent light is projected on a rough surface, the light is strongly scattered to all directions. When the highly coherent scattered lights meet within the coherent length, the interference occurs and a pattern of many bright and dark spots is formed. It is the origin of laser speckles.

Speckles that are not related to displacement of the light source are considered as noises and these noises will deteriorate the image quality. However, it is discovered that speckles that are correlated with displacement of the light source can be used as a measurement means. Lately, the characteristics of speckles that are correlated with displacement of the light source were used to detect the relative motion of the navigator. For example, U.S. Pat. No. 20050024623 (hereinafter referred as the patent 623) discloses an optical searching method and device. An embodiment of patent 623 uses a coherent light source to emit a coherent beam toward a surface and the light beam is then reflected by and leaves the surface. A sensor is disposed in the path of the specular reflected light and the reflected beam received by the sensor contains a speckle pattern with a number of speckles within this speckle pattern. Correlation of successive narrow bandwidth scatter pattern images is typically used to determine the displacement of the relative movement.

Another related technique is the patent in the PCT Pat. No. WO2004075040 (hereinafter referred as the patent 040). It discloses an optical signal processing method and device for optical mice with digital data processing. The relative displacement vector between the laser beam signal of the mouse and the surface of the object that generates the speckle is calculated by collecting the moving signal of the speckle. The device used to implement the idea includes an opto-electrical signal amplifying and rectifying module, a direction-determine and counting module, and a computer interface in the mouse. It further includes a laser source and an opto-electrical sensor, in which the sensor is used for receiving the speckle signals of the reflected laser lights from object surface. The opto-electrical sensor sends the received opto-electrical signal to amplify and rectify module.

The above-mentioned signal reading means are based upon the variation in speckle brightness in the image captured by the sensor, thereby determine the moving direction and distance of the mouse. The 040 patent has a simple structure. However, if the reflecting surface is very smooth, then the size of the produced speckle is much smaller. Therefore, it is difficult to detect the variation in the speckle brightness. In that case, the resolution is decreased much, rendering a lower sensitivity.

The 623 patent mainly uses the sensor to receive the reflective beam equal to the specular reflection. Therefore, the signals received by the sensor can be divided into direct current (DC) and alternating current (AC) parts. The DC part refers to the uniform distribution of the reflected lights. The brightness variation of the speckle belongs to the AC part. When the size of the speckle is too small, the AC part is hard to be extracted and analyzed.

In summary, the sensitivity is determined by the size of speckle. Speckles with small size cannot be effectively identified. Therefore, how to control the size of the speckle and reduce the variation of speckle pattern during the movement of the displacement sensor are the keys to increase the sensitivity.

## SUMMARY OF THE INVENTION

This invention relates to the application of relative motion detection utilizing a coherent light source and improved speckle pattern imaging configuration and techniques. The purpose of this invention is to provide a device and method for controlling and measuring speckle images in displacement monitory applications. When the scattered lights bouncing off a surface illuminated by a beam of coherent light source are allowed to pass through a small light restrictive aperture, diffraction phenomenon occurs. The diffracted optical waves originated from adjacent lights passing through the aperture interfere with one another to produce larger speckle than that without small aperture. This size-enlargement effect makes it possible for the detector array to register each speckle spot with more certainty and determine the movement of the pattern with better accuracy. The relative motion between the surface and the beam source - detector assembly can be calculated by comparing the position changes of speckle pattern from consecutive picture frames taken by the detector unit.

In accordance with the invention, it is also important the lights scattered into the detector array must be limited to a small enough area from the illuminated surface. A combination of lens and aperture, or apertures, will serve the purpose by limiting the incident angle of the scattered lights. Constricting the coherent source beam through a suitable beam-shaping unit to achieve a small illumination spot can further help the same purpose.

To achieve the above object, a speckle's imaging device disclosed by the invention has a light source that emits a highly coherent light onto a surface to produce scatter lights. The scattered lights pass through a small-aperture light restrictive element and are then diffracted by this aperture. The diffracted lights interfere with one another to produce a speckle pattern. Finally, the sensor picks up the speckle pattern to form a speckle image.

Besides, a light shrink unit can be used to reduce the diameter of the highly coherent light emitted by the light source. Alternatively, a light converging means can be used to minimize the diameter of the beam incident on the object surface so as to increase the dynamical range that can be analyzed from the moving speckle patterns.

Another embodiment of speckle imaging method of the present invention emits a highly coherent light onto a surface to produce scatter lights. The scattered lights pass through a small-aperture light restrictive element and then generate a diffractive effect. The diffractive lights interfere with one another to produce a speckle pattern. Finally, the speckle pattern is recorded to form an image.

After recording the speckle pattern that is produced at present to form an image, a further step is to compare this image to the previous image that is already obtained during the motion of the image sensor thereby the movement of the sensor assembly relative to the surface can be determined.

After the step of emitting a highly coherent light, the method further includes the step of reducing the diameter of the highly coherent light.

Alternatively, after the step of generating scattered lights by projecting a highly coherent light onto a surface, the method further includes a step of passing the scattered lights through an aperture to restrict the incident angle of the scattered lights.

Thus, to detect the motion of a sensor assembly relative to an object surface, good sensitivity requires that the image of the speckle pattern must be clear and stable. Besides, the speckles themselves must be sufficiently large in size and have a high contrast relative the background in order to be easily identified. Moreover, the variation of the speckle pattern during the motion of sensor assembly relative to the reference surface must be sufficiently small for the convenience of identification. The present invention utilizes the diffraction and interference effects to enlarge the size of speckle, and limits the incident angle of the scattered lights to reduce the variation of the speckle image. Thus, the speckle image is clear and has little variation during the motion of sensor assembly relative to the reference surface for a certain distance. Therefore, the disclosed device and method for capturing speckle pattern are both stable and sensitive.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

## BRIEF DESCRIPTION OF THE DRAWINGS

The present invention will become more fully understood from the detailed description given hereinbelow illustration only, and thus are not limitative of the present invention, and wherein:

FIGS. 1A, 1B, and 1C show the system structure of the invention;

FIG. 2 is a schematic view of the diffraction phenomenon produced by the light restrictive element in the invention;

FIG. 3 is a schematic view of the speckle formed by the invention;

FIG. 4 shows the motion of the speckle according to the invention;

FIGS. 5A and 5B are schematic views showing the optical path difference (OPD) in the invention;

FIGS. 6A, 6B, and 6C are schematic views of the light reduce unit in different embodiments of the invention;

FIG. 7A is a schematic view of adding a secondary aperture to the invention;

FIG. 7B is a schematic view showing that the incident angle of the scattered lights entering the image sensor is limiting by the restrictive aperture of the present invention;

FIG. 7C is a schematic view of light path and the secondary reflection light passing into the image sensor;

FIG. 7D is a schematic view of the front restrictive light element blocking the secondary reflection light of the scattered light passing into the image sensor;

FIG. 8A is a schematic view of showing an application of the invention;

FIG. 8B is a schematic view of showing another application of the invention;

FIG. 8C is the work processes of the mouse cursor of the invention;

FIGS. 9A, 9B, 9C and 9D are flowcharts of the speckle capturing method.

## DETAILED DESCRIPTION OF THE INVENTION

The system structure of the present invention is illustrated in FIG. 1A. When a light beam incident onto a surface 100, the properties of the reflected lights are determined by the roughness of the surface 100. The smoother the surface 100 is, the more mirror-like the surface 100 will be. In that case, the incident light 110 is almost totally reflected, with the reflected energy nearly the same as the incident energy. The rougher the surface 100 is, the foggier the surface 100 will be. After projecting onto the rough surface 100, the light is scattered almost in all directions. This is because the surface 100 is so rough that the lights propagate in arbitrary directions due to the scattering effect.

After the incident beam 110 projects onto the surface 100, a lens 140 and an image sensor 150 are used to receive the scattered light 120. In order to enlarge the speckle, a light restrictive element is disposed in front of the image sensor 150. The light restrictive element is a combination of an aperture 130 and a lens 140. The aperture 130 controls the size of speckles and can be disposed in front of the lens 140, as shown in FIG. 1A, or the aperture can be disposed between the lens 140 and the image sensor 150, as shown in FIG. 1B. Beside, the position and diameter of the aperture 130 in FIG.1B will limit the incident angle of the scattered light 120. In this embodiment, the image sensor is a two-dimensional sensor, such as charge couple device (CCD) or complementary metal oxide semiconductor (CMOS), for capturing images.

Alternatively, the aperture may be replaced by a microlens 131, featured that a light blocking plate 132 is placed around the microlens 131 to serve as a light restrictive element, as shown in FIG. 1C. (Since the diameter of the microlens 131 is small, it provides the effect of the aperture 130.) The scattered lights passing through the microlens 131 and diffracting by this miceolens 131 that will control the size of speckles. The microlens 131 also functions as a lens 140 to form an image on the image sensor 150. In the following paragraphs, how the light restrictive element enlarges the size of speckles is described.

FIG. 2 shows the diffractive pattern of light passing through a light restrictive element. When a highly coherent light beam 160, such as laser light, passes through small-diameter aperture 170, diffraction occurs. Therefore, the light forms several concentric rings on the screen 190 due to diffraction. The central one represents a maximum and forms a bright spot 180 of lateral width $2\delta$. The half-width $\delta$ of the bright spot 180, the wavelength $\lambda$ of light wave, the diameter *d* of the hole 170, and the distance *Z* between the hole 170 and the screen 190 satisfy the following relation:

$$\delta = 1.22 \frac{\lambda}{d} z$$

FIG. 3 shows that the scattered light 120 created from different adjacent scattering centers on the illuminated surface. Each ray of the scattered light 120 passes through the light restrictive element. The light restrictive element is implemented using an aperture 130 of small diameter, resulting in the diffractive effect of the incoming light. Therefore, different bright spots 180 interfere with one another resulting in a bright and dark spots distribution that forming a speckle pattern. Diffraction theory predicts larger speckle size will be created by smaller aperture 130. Therefore, it becomes much easier to capture the motion of the speckle pattern using an image sensor 150.

In the disclosed system structure, the scattered lights passing through the light restrictive aperture and diffracted by the aperture, thereby making the size of speckle larger than that of the minimal resolving element of the image sensor. Therefore, the image sensor can accurately display the shape of the speckle and determine the motion of the speckle pattern during the movement of the sensor relative to an object surface.

Since the position of the speckle pattern at the image sensor 150 changes as the surface 100 moves, the speckle pattern has to remain roughly the same before and after the surface 100 moves in order to tell the direction and amount of the position change of each speckle spot. However, the speckle pattern is formed by the interference of the scattered light 120 reflected from the uneven surface 100. Thus, the pattern of the speckle varies during the relative motion of the image sensor 150 relative the surface 100. But, the speckle pattern variation is continuous instead of discrete. If the variation of the speckle pattern is reduced during the movement of the image sensor relative the surface, the speckle patterns have strong correlations within a certain moving range when the speckle image sensor 150 moves relative to the surface 100. Therefore, it is possible to determine the motion of the speckle pattern by comparing the speckle images at sequential picture frames thereby determining the direction and distance of the displacement of the speckle captured device.

The light source emits highly coherent light. The most commonly seen highly coherent light source is a laser. Therefore, the light source can be a vertical cavity surface emitting laser (VESEL), an edge emission laser (EEL), or a light emitting diode (LED) that can emit highly coherent light with a narrow band filter.

FIG. 4 shows how the speckle moves in accordance with the invention. When the aperture 130 is not moving, the scattered light 120 from point A and point B form images at point A' and point B', respectively, on the image sensor 150 via point O of the aperture 130. When the aperture 130 moves a distance *dl*, the illuminated region also moves a distance *dl* accordingly, then the scattered light 120 from point A and point B form images at point A" and B" on the image sensor 150 via point O' of the aperture 130. As the aperture 130 moves a distance *dl*, the region on the surface 100 that is illuminated by light beam also moves in the same direction a distance *dl*. The point in the new illuminated region equivalent to point A of the original illuminated region is called point $A_{eq}$. The point in the new illuminated region equivalent to point B of the original illuminated region is called point $B_{eq}$. The scattered lights from point $A_{eq}$ and point $B_{eq}$ form images at point $A_{eq}$" and point $B_{eq}$", respectively, on the image sensor 150 via point O' of the aperture 130. Since the image sensor 150 and the aperture 130 move together, therefore, for the image sensor 150 the paths A to A' and $A_{eq}$ to $A_{eq}''$ are geometrically equivalent. Points A and $A_{eq}$ should form images at the same position on the image sensor 150. In other words, for the image sensor 150, points A' and $A_{eq}''$ fall on the same pixel while points B' and $B_{eq}''$ fall on the same pixel. Observing the speckle image from the image sensor 150 after the image sensor moves, the characteristic image of point A has moved from the original point $A_{eq}''$ to point A". Likewise, the characteristic image of B also moves from point $B_{eq}''$ to point B". Therefore, it is possible to determine the displacement relation between points $A_{eq}''$ and A" and between points $B_{eq}''$ and B" by comparing the speckle patterns, thereby determining the direction and distance of the displacement of the image sensor 150 relative to the surface 100. The change caused by moving from point $A_{eq}''$ to point A" and from point $B_{eq}''$ to point B" represents the position change of the image in geometric optics. However, the change in the intensity of the laser speckles measured at point A" or B" is related to the optical path difference (OPD) caused by the variation in the reflected optical paths. With reference to FIGS. 5A and 5B, we compare the optical path of point A after image sensor moving (that is the path between A and A") and the equivalent optical path of point A before image sensor moving (that is the path between $A_{eq}$ and $A_{eq}''$) and compute the $OPD_A$ which is the OPD between A-A" and $A_{eq}$-$A_{eq}''$. The moving distance *dl* of the aperture 130, the $OPD_A$, and the incident angle $\psi_A$, defined by the angle between the scattered light 120 from point A and the normal of the aperture, satisfy the following relation:

$$OPD_A \approx dl \sin \phi_A$$

Therefore, the moving distance *dl* of the aperture 130, the $OPD_B$, and the incident angle $\psi_B$, defined by the angle between the scattered light 120 from point B and the normal of the aperture, satisfy the following relation:

$$OPD_B \approx dl \sin \phi_B$$

If $\psi_A$ is equal to $\psi_B$, then $OPD_A$ is equal to $OPD_B$. This means that the phase distributions of the speckle patterns before and after the movement of the sensor assembly relative to the surface are invariant, which in turn means that the intensity distributions of the speckle patterns do not change before and after the movement of the sensor assembly relative to the surface. If $\psi_A$ and $\psi_B$ are not equal to each other then $OPD_A$ is not equal to $OPD_B$. If their difference exceeds a critical value, the speckle pattern after the motion deforms so much that it is quite different from the speckle pattern before the motion. If that is the case, the speckle pattern obtained after the motion of the sensor could not be recognized. How much difference between $OPD_A$ and $OPD_B$ can be tolerated such that the speckles do not deform too much depends on the roughness of the surface 100. Experimental results show that the maximum OPD tolerable of an aluminum or copper plate is much larger than that of a plastic plate or smooth photo paper. Although the maximum tolerable OPD is different when different surface and coherent light source are used, the maximum tolerable OPD for the same coherent light source 200 and the same surface 100 is a constant.

Therefore, the change in the OPD is related to the incident angle ψ of the scattered light 120 and the displacement of aperture 130 combined with the image sensor 150. The incident angle ψ is in turn related to the radius *r* of the illuminated region and the distance Z' between the aperture 130 and the surface 100:

$$\tan\phi = \frac{r}{z'}$$

If the incident angle ψ is very small, $\phi \approx \frac{r}{Z'}$. Moreover, if the maximum tolerable OPD is a constant and the distance Z' between the aperture 130 and the surface 100 is held constant, the need to reduce the incident angle ψ means that *r* has to be reduced. This indicated that the illuminated region has to be reduced. In this case, the shape of the speckle pattern can be maintained within a certain range of motion and it remains recognizable. That is, when we move the speckle imaging device with respect to a surface within a certain limited range, the shape of the speckle will not change or changes very little so that it still recognizable. Since the speckle's imaging device has a displacement, the image of the new speckle pattern is thus formed at another position of the image sensor after the movement of the sensor assembly. Therefore, the direction and distance of the movement of the speckle's imaging device can be determined by recording the consecutive images of the speckle patterns during movement followed by comparing these images consecutively.

To achieve such a condition, the diameter of the incident beam has to be reduced. Embodiments of the present invention place a light beam contraction unit 210 close to the light emitting source and serve as to reduce the diameter of the incidence beam as it project onto the surface 100, referring to FIGS. 6A, 6B, and 6C. In one of the embodiments, a convergent lens 211 is disposed in front of the light source 200 and the light emitted from the light source 200 will be converged when passing through the convergent lens 211, as shown in FIG. 6A. Therefore, when the surface 100 is close to the focal point of this convergent beam, the illuminated region is small. Alternatively, one can dispose a first convergent lens 212 combined with a second convergent lens 213, whose focal points coincide. The focal lengths of the first lens 212 and the second lens 213 are *f*1 and *f*2, respectively. When *f*2<*f*1, the diameter of the incident beam is reduced by a factor of $\frac{f1}{f2}$, as shown in FIG. 6B. Yet another solution is to use a first lens 212 and a third lens 214 to form a light beam diameter reduced unit 210 with the third lens 214 is a divergent lens. When the focal points of the first lens 212 and the third lens 214 coincide, the incident beam also shrinks as it goes through the two lenses system that is constructed by lenses 212 and 214. This scheme has a smaller distance between the first lens 212 and the third lens 214. This helps reducing the overall size of the system, as shown in FIG. 6C.

With reference to FIG. 7A, in addition to manipulating the beam near the light source 200, it is also feasible to manipulate the scattered light 120. More explicitly, before the scattered light 120 enters the lens 140 and the aperture 130, a secondary aperture 215 is disposed. The secondary aperture 215 first blocks part of the scattered light 120, allowing only a certain part of the scattered light 120 to pass through. The field-of-view of the image sensor is thus reducing by the secondary aperture 215.

Referring to FIG. 7B, two object points E and F in the surface 100 are chosen as the reference points. The scattered lights from points E and F are passing through the aperture 130, the lens 140 and should finally focus to points E' and F', respectively, on the image sensor 150. By using the ray tracing, we recognize that both scattered lights from points E and F will focus on the image sensor 150 if the aperture 130 is at the position G. If the aperture 130 is at the position H, only scattered light from point F will focus on the image sensor 150. Thus, by properly adjusting the diameter and position of the aperture 130, the speckle size can be enlarged and the incident angle of the scattered light 120 can be limited.

An outer sleeve 151 of the image sensor is shown in FIG. 7C. The scattered light by the point I on the object surface 100 that passing through the lens 140 may hit on the point I' of the outer sleeve instead of incident on the image sensor 150 directly, as shown in the figure. The point I' is then become a new scattered source. The light scattered by the point I' pass through the aperture on the light limiting element 130 might be incident on the point I" of the image sensor 150 and resulted as the secondary reflection. If the secondary reflection can't be eliminated then this background noise will be disadvantages for the signal processing.

Referring to FIG. 7D, in order to block the background noise, which is produced by the secondary reflection, a front aperture 152 is disposed between the surface 100 and the lens 140. The scattered light from point F on the object surface is then allowed to pass the front aperture 152 and falls on the image sensor 150, while the scattered light from point I on the object surface is incident on point I' of the sleeve and can not received by the image sensor. Accordingly, the background noise will be reduced and the signal to noise ratio of the image sensor 150 is increased.

The disclosed device and method for capturing speckles can be applied to laser mouse 300, as shown in FIG. 8A. The laser source 200 and the image sensor 150 are both installed inside the housing 310 of a laser mouse 300. The beam emitted from the laser source 200 is converged by a convergent lens 211 and project onto a surface 100, from which the scattered light 120 goes through a lens 140 followed by a small aperture 130 and finally imaged onto an image sensor 150. A first speckle pattern image is recorded with the image sensor 150 before the housing 310 moves and the second speckle pattern image is then recorded with the image sensor 150 with the housing 310 moves relative to the surface 100. By determining the correlation between the first and second speckle images, magnitude and direction of the displacement of the housing 310 relative to the surface 100 are determined for the motion of the cursor in the computer.

Referring to FIG. 8B, a laser source 200 and an image sensor 150 are disposed in the housing 310 of the laser mouse 300. The light emitted by the laser source 200 passes through the convergent lens 211 and incident on the object surface 100 and a scattered light 120 will be produced. When the scattered light 120 passes through the front aperture 152 and the back aperture 130, with the secondary reflection blocked out, will falls on the image sensor and create a speckle pattern. In the mean time, the incident view angle of the scattered light 120 entering the image sensor 150 is limited. Before the housing has a relative motion to the object surface a first speckle pattern is recorded. A second speckle pattern is then recorded after the housing has a relative motion to the object surface. The relative motion of the first light speckle pattern to the second light speckle pattern can be recognized by pattern recognition. Therefore, the direction and the magnitude of the relative motion between the housing 310 and the object surface 100 can be determined.

The FIG. 8C illustrates the work processes of the mouse cursor as the following description. 1. The coherent light illuminates the surface of reflection object. 2. The scattered light of the surface passes through a front restrictive light element, which can be an aperture. 3. The scattered light further passes through a lens. 4. Then, the scattered light passes a restrictive light element, which can be an aperture having a smaller diameter. 5. Finally, the scattered light forms an image on two-dimension image sensor to get light speckles image. 6. The first light speckles image is recorded before the mouse movement. 7. The second light speckles image is recorded after the mouse movement. 8. The relative characters of the first light speckles image and the second light speckles image are compared. 9. The mouse movement information is got.

With reference to FIG. 9A, the speckle pattern imaging method starts by emitting a beam of highly coherent light (step 500). After being reduced in its diameter of this highly coherent light (step 510), the light illuminates a surface to produce scattered lights (step 520). The scattered lights pass through a light restrictive element to produce diffracted lights (step 530). The diffracted lights result interference to produce a speckle pattern (step 540). The images of the speckle patterns are recorded (step 550). The motion of the sensor relative to the surface is then determined by comparing the images of the speckle patterns (step 560).

With reference to FIG. 9B, another embodiment starts by emitting a beam of highly coherent light (step 500). The highly coherent light projects onto a surface to produce scattered lights (step 511). The scattered lights pass through a first aperture (step 521). The scattered lights further pass through a secondary aperture, the field-of-view angle of the image sensor is limiting by the secondary aperture and the said secondary aperture also serves as a light restrictive element. The diffracted lights are produced when the scattered lights pass through the said restrictive element (step 530). The diffracted lights interfere with one another to produce a speckle pattern (step 540). The images of the speckle patterns are recorded during the consecutive motion of the sensor's housing relative an object surface (step 550). The relative motion is then determined by comparing the consecutive images of the speckle patterns (step 560).

Referring to FIG. 9C, the speckle imaging method starts from emitting a beam of highly coherent light (step 500). The highly coherent light is then projecting onto a surface to produce scattered lights (step 511). A light restrictive element, includes an aperture and a lens with the lens being disposed in front of the aperture, is used to limit the incident angle of the scattered light (step 522). By passing the scattered lights through the said light restrictive element, a number of diffracted light waves are generated (step 531). The diffracted lights interfere with one another to produce a speckle pattern (step 540). The images of the speckle patterns are recorded during the consecutive motion of the sensor's housing relative an object surface (step 550). The motion relative to the surface is then determined by comparing the images of the speckle patterns (step 560).

Please refer to FIG. 9D. First, A coherent light is emitted (step 500). The coherent light emits into a surface and then producing a scattered light (step 511). An aperture deposed between the surface and a lens to form a front restrictive light element (step 512). When the scattered light passes through the front light restrictive element, the secondary reflection light of the scattered light is blocked to not emit into the image sensor (step 513). An smaller aperture is deposed between the lens and the image sensor to form a restrictive light element (step 522). When the scattered light passes the restrictive light element, an incident view angle of the scattered light emitting the image sensor is limited and a diffractive light is produced by the diffractive effect of the diameter of the restrictive light element (step 531). The diffractive lights interfere each other to form light speckles (step 540). Finally, the light speckle is recorded to form a speckle pattern (step 550). The motion relative to the surface is then determined by comparing the images of the speckle patterns (step 560).

In summary, the invention provides a method and device for capturing speckles. By disposing a light restrictive element in front of the image sensor, the speckles could be enlarged and the variation of the speckle pattern will be reducing for the convenience of measurement of the relative motion of the speckle patterns. Therefore, it is fairly easy to determine the relative motion of the speckle patterns. The invention can be applied to an optical mouse to detect the motion of the mouse with high accuracy and sensitivity. Besides, the disclosed method and device for capturing speckles can be applied to a number kind of surfaces.

While the invention has be described in conjunction with specific embodiments, it is evident to those skilled in the art that many alternatives, modifications, and variations will be apparent in light of the foregoing description. Accordingly, the invention is intended to embrace all other such alternatives, modifications, and variations that fall within the scope of the appended claims.

## Claims

**1.** A device for capturing speckles, comprising:

a light source, which emits a beam of highly coherent light to project onto a surface and to produce scattered light;
a front light restrictive element, which is used to block a secondary reflection light from entering the image sensor,
a light restrictive element, which produces a plurality of diffracted lights so that the diffracted lights interfere with one another to produce speckles;
wherein a first speckle image is generated while the image sensor receiving the speckles and a second speckle image is generated after the light restrictive element and the image sensor have moved with respect to the surface, and a direction and a distance of the motion are determined by comparing the first speckle image with the second speckle image,
wherein the light restrictive element consists of an aperture and a lens with the aperture is disposed in front of the lens so as to the scattered lights pass through the aperture to produce the diffracted lights, which interfere with one another to produce the speckles forming an image on the image sensor, and
whereby the front light restrictive element is an aperture and the aperture is disposed between the surface and the lens such that the scattered light passes through the aperture and the secondary reflection light of the scattered light is blocked and incapable of entering the image sensor.

**2.** The device for capturing speckles of claim 1 further comprising a secondary aperture disposed on the side of the aperture facing the surface, wherein the secondary aperture and the aperture limit the field-of-view of the image sensor.

**3.** The device for capturing speckles of claim 1, wherein the light restrictive element is a microlens disposed in front of the image sensor for making the speckles onto the image sensor and for the scattered lights producing the diffracted lights.

**4.** The device for capturing speckles of claim 1, further comprising a light blocking plate connected with the microlens to block an unnecessary scattered light.

**5.** The device for capturing speckles of claim 1 further comprising a lens system disposed in front of the light source for convert the highly coherent light into a collimated beam.

**6.** The device for capturing speckles of claim 1 further comprising a beam reducing unit which is a convergent lens disposed in front of the light source for converging the high coherent light to a convergent beam.

**7.** The device for capturing speckles of claim 6 further comprising the beam reducing unit for reducing the diameter of the beam of highly coherent light emitted by the light source.

**8.** The device for capturing speckles of claim 6, wherein the beam reduced unit has a first convergent lens and a second convergent lens, the first convergent lens and the second convergent lens are arranged in a confocal structure in order to reduce the diameter of the beam of the highly coherent light.

**9.** The device for capturing speckles of claim 6, wherein the beam reduced unit has a first lens and a third lens whose focal points are coincided and the third lens is a divergent lens so that the diameter of the beam of highly coherent light is reduced.

**10.** An optical mouse, comprising:

a light source, which emits a beam of highly coherent light to project onto a surface to produce scattered light;
a front light restrictive element making the scattered light passing through the front light restrictive element and a secondary reflection light of the scattered light blocked and incapable of emit into the image sensor,
a light restrictive element, which produces at least one diffracted lights from the scattered lights so the diffracted lights interfere with one another to produce speckles;
a image sensor, which receives the diffracted lights and generates a first speckle image before the movement of the image sensor and a second speckle image after the movement of the image sensor with respect to the surface; and
a processing unit, which receives and compares the first speckle image and the second speckle image to determine the direction and distance of the displacement of the light restrictive element and the image sensor,
wherein the light restrictive element consists of an aperture and a lens with the aperture is disposed in front of the lens so as to the scattered lights pass through the aperture to produce the diffracted lights, which interfere with one another to produce the speckles forming an image on the image sensor, and
whereby the front light restrictive element is an aperture and the aperture is disposed between the surface and the lens such that the scattered light passes through the aperture and the secondary reflection light of the scattered light is blocked and incapable of entering the image sensor.

**11.** The optical mouse of claim 10, wherein the light restrictive element has an aperture and a lens and the aperture is disposed between the lens and image sensor so that the incident angle of the scattered light is limited by the aperture and the diffracted lights are produced by the scattered lights, and the diffracted lights interfere with one another to produce the speckle images in the image sensor.

**12.** A method for capturing speckles , comprising the steps of:

emitting a beam of highly coherent light;
projecting the highly coherent light onto a surface to produce scattered lights;
the scattered lights passing through a front light restrictive element and a secondary reflection light of the scattered light being blocked and incapable of projecting onto the image sensor,
passing the scattered lights through a second light restrictive element, which is a combination of an aperture and a lens, to generate at least one diffracted lights; and
allowing the diffracted lights to interfere with one another to generated speckles; and recording images of the speckles,
**characterized in that** the step of projecting a highly coherent light into a surface to produce a plurality of scattered lights is followed by the step of passing the scattered lights through a secondary aperture so that the size of the speckles is enlarged and the combination of the secondary aperture and the light restrictive element limit the field-of-view of the image sensor,
whereby the front light restrictive element is an aperture and the aperture is disposed between the surface and the lens such that the scattered light passes through the aperture and the secondary reflection light of the scattered light is blocked and incapable of entering the image sensor.

**13.** The method for capturing speckles of claim 12, wherein the steps of recording images of the speckle pattern is followed by the step of determining the motion of the speckle by comparing the successive pattern images that are generated during the relative movement of the image sensor and the surface.

**14.** The method for capturing speckles of claim 12, wherein the step of emitting a beam of highly coherent light is followed by the step of reducing the diameter of the highly coherent light.

## Patentansprüche

**1.** Eine Vorrichtung zur Erfassung von Speckles umfassend:

eine Lichtquelle, welche einen Strahl von hoch kohärentem Licht zur Projektion auf eine Oberfläche und zur Erzeugung gestreuten Lichts emittiert;
ein vorderes licht-restriktives Element, welches genutzt wird, um sekundäres Reflektionslicht daran zu hindern, in den Bildsensor einzudringen;
ein licht-restriktives Element, welches eine Vielzahl gebeugter Lichtstrahlen erzeugt, so dass die gebeugten Lichtstrahlen miteinander interferieren, um Speckles zu erzeugen;
worin ein erstes Specklebild erzeugt wird während sich der Bildsensor, der die Speckles empfängt, und ein zweites Specklebild erzeugt wird, nachdem sich das licht-restriktive Element und der Bildsensor, bezogen auf die Oberfläche, bewegt haben und eine Richtung und eine Distanz der Bewegung durch Vergleich des ersten Specklebildes mit dem zweiten Specklebild bestimmt werden,
worin das licht-restriktive Element aus einer Apertur und einer Linse besteht, wobei die Apertur vor der Linse angeordnet ist, so dass das gestreute Licht durch die Apertur hindurchtritt, um gebeugte Lichter zu erzeugen, welche miteinander interferieren, um die Speckles, die ein Bild auf dem Bildsensor formen, zu erzeugen, und
wobei das vordere licht-restriktive Element eine Apertur ist und die Apertur so zwischen der Oberfläche und der Linse angeordnet ist, dass das gestreute Licht durch die Apertur hindurchtritt und das sekundäre Reflektionslicht des gestreuten Lichts abgefangen wird und außer Stande ist, in den Bildsensor einzudringen.

**2.** Die Vorrichtung zur Erfassung von Speckles aus Anspruch 1 zusätzlich umfassend eine sekundäre Apertur, die auf der Seite der Apertur, die der Oberfläche zugewandt ist, angeordnet ist, wobei die sekundäre Apertur und die Apertur das Bildfeld des Bildsensors einschränken.

**3.** Die Vorrichtung zu Erfassung von Speckles aus Anspruch 1, worin das licht-restriktive Element eine Mikrolinse ist, welche vor dem Bildsensor angeordnet ist, um die Speckles auf dem Bildsensor herzustellen und aus den gestreuten Lichtern gebeugte Lichter zu erzeugen.

**4.** Die Vorrichtung zur Erfassung von Speckles aus Anspruch 1, zusätzlich umfassend eine lichtabhaltende Platte, die mit der Mikrolinse verbunden ist, um unnötiges gestreutes Licht abzuhalten.

**5.** Die Vorrichtung zur Erfassung von Speckles aus Anspruch 1, zusätzlich umfassend ein Linsensystem, welches vor der Lichtquelle angeordnet ist, um das hoch kohärente Licht in einen kollimierten Strahl umzuwandeln.

**6.** Die Vorrichtung zur Erfassung von Speckles aus Anspruch 1, zusätzlich umfassend eine strahlreduzierende Einheit, welche eine Sammellinse ist, die vor der Lichtquelle angeordnet ist, um das hoch kohärente Licht zu einem konvergenten Strahl zu konvergieren.

**7.** Die Vorrichtung zur Erfassung von Speckles aus Anspruch 6, zusätzlich umfassend die strahlreduzierende Einheit, um den Durchmesser des Strahls aus hoch kohärentem Licht, emittiert von der Lichtquelle, zu reduzieren.

**8.** Die Vorrichtung zur Erfassung von Speckles aus Anspruch 6, worin die strahlreduzierende Einheit eine erste Sammellinse und eine zweite Sammellinse hat, die erste Sammellinse und die zweite Sammellinse sind in einer konvokalen Struktur angeordnet, um den Durchmesser des Strahls aus hoch kohärentem Licht zu reduzieren.

**9.** Die Vorrichtung zur Erfassung von Speckles aus Anspruch 6, worin die strahlreduzierende Einheit eine erste und eine dritte Linse hat, deren fokale Punkte zusammenfallen und die dritte Linse eine Zerstreuungslinse ist, so dass der Durchmesser des Strahls aus hoch kohärentem Licht reduziert wird.

**10.** Eine optische Maus, umfassend:

eine Lichtquelle, welche einen Strahl aus hoch kohärentem Licht zur Projektion auf eine Oberfläche zur Erzeugung gestreuten Lichts emittiert;
ein vorderes licht-restriktives Element, welches das gestreute Licht dazu bringt durch das vordere licht-restriktive Element hindurchzutreten und sekundäres Reflektionslicht aus dem gestreuten Licht abhält und außer Stande macht, in den Bildsensor zu emittieren;
ein licht-restriktives Element, welches mindestens ein gebeugtes Licht aus den gestreuten Lichtern erzeugt, so dass das gebeugte Licht miteinander interferiert, um Speckles zu erzeugen;
ein Bildsensor, der gebeugte Lichter empfängt und ein erstes Specklebild vor der Bewegung des Bildsensors und ein zweites Specklebild nach der Bewegung des Bildsensors bezogen auf die Oberfläche erzeugt;
eine Verarbeitungseinheit, welche das erste Specklebild und das zweite Specklebild empfängt und vergleicht, um die Richtung und Distanz der Verrückung des licht-restriktiven Elements und des Bildsensors zu bestimmen;
worin das licht-restriktive Element aus einer Apertur und einer Linse besteht wobei die Apertur vor der Linse angeordnet ist, so dass das gestreute Licht durch die Linse hindurchtritt, um die gebeugten Lichter zu erzeugen, welche miteinander interferieren, um Speckles zu erzeugen, die ein Bild auf dem Bildsensor erzeugen, und
wobei das vordere licht-restriktive Element eine Apertur ist und die Apertur zwischen der Oberfläche und der Linse angeordnet ist, so dass das gestreute Licht durch die Apertur hindurchtritt und das sekundäre Reflektionslicht des gestreuten Lichts abgehalten wird und außer Stande ist, in den Bildsensor einzudringen.

**11.** Die optische Maus aus Anspruch 10, worin das licht-restriktive Element eine Apertur und eine Linse hat, und die Apertur zwischen der Linse und Bildsensor angeordnet ist, so dass der Einfallswinkel des gestreuten Lichts durch die Apertur eingeschränkt wird und die gebeugten Lichter aus den gestreuten Lichtern erzeugt werden und die gebeugten Lichter miteinander interferieren, um Specklebilder im Bildsensor zu erzeugen.

**12.** Eine Methode zur Erfassung von Speckles, die Schritte umfassend:

emittieren eines Strahls aus hoch kohärentem Licht;
projizieren des hoch kohärenten Lichts auf eine Oberfläche, um gestreutes Licht zu erzeugen;

die gestreuten Lichter treten durch ein vorderes licht-restriktives Element hindurch und ein sekundäres Reflektionslicht des gestreuten Lichts wird abgehalten und ist außer Stande, auf den Bildsensor zu projizieren;
Hindurchtreten des gestreuten Lichts durch ein zweites licht-restriktives Element, welches eine Kombination aus einer Apertur und einer Linse ist, um mindestens ein gebeugtes Licht zu erzeugen; und
Zulassen, dass das gebeugte Licht miteinander interferiert, um Speckles zu erzeugen; und Aufnehmen von Bildern der Speckles;
charakterisiert dadurch, dass der Schritt des Projizierens eines hoch kohärenten Lichts auf eine Oberfläche, um eine Vielzahl an gestreuten Lichtern zu erzeugen, gefolgt wird von dem Schritt des Hindurchtretens des gestreuten Lichts durch eine sekundäre Apertur, so dass die Größe der Speckles vergrößert wird und die Kombination der sekundären Apertur und des licht-restriktiven Elements das Bildfeld des Bildsensors einschränken;
wobei das vordere licht-restriktive Element eine Apertur ist und die Apertur zwischen der Oberfläche und der Linse angeordnet ist, so dass das gestreute Licht durch die Apertur hindurchtritt und das sekundäre Reflektionslicht des gestreuten Lichts abgehalten wird und außer Stande ist, in den Bildsensor einzudringen.

**13.** Die Methode zur Erfassung von Speckles aus Anspruch 12, worin die Schritte der Bilderaufnahme der Specklemuster gefolgt werden vom Schritt der Bestimmung der Bewegung der Speckle durch Vergleich der sukzessiven Musterbilder, die während der relativen Bewegung von Bildsensor und Oberfläche erzeugt werden.

**14.** Die Methode zur Erfassung von Speckles aus Anspruch 12, worin der Schritt der Emission eines Strahls aus hoch kohärentem Licht gefolgt wird von dem Schritt der Reduktion des Durchmessers des hoch kohärenten Strahls.

## Revendications

**1.** Dispositif de capture de granularités laser, comprenant :

une source lumineuse, qui émet un faisceau de lumière extrêmement cohérente pour être projeté sur une surface et produire des lumières diffusées ;
un élément de restriction de la lumière avant, qui est utilisé pour bloquer la pénétration d'une lumière de réflexion secondaire dans le capteur d'image ;
un élément de restriction de la lumière, qui produit une pluralité de lumières diffractées de telle sorte que les lumières diffractées interfèrent les unes avec les autres pour produire des granularités laser ;
dans lequel une première image de granularité laser est générée pendant que le capteur d'image recevant les granularités laser et une seconde image de granularité laser est générée une fois que l'élément de restriction de la lumière et le capteur d'image se sont déplacés par rapport à la surface, et une direction et une distance du mouvement sont déterminées en comparant la première image de granularité laser à la seconde image de granularité laser ;
dans lequel l'élément de restriction de la lumière se compose d'une ouverture et d'une lentille, l'ouverture étant disposée devant la lentille sorte que les lumières diffusées passent à travers l'ouverture pour produire les lumières diffractées, qui interfèrent les unes avec les autres pour produire les granularités laser qui forment une image sur le capteur d' image ; et
moyennant quoi l'élément de restriction de la lumière avant est une ouverture et l'ouverture est disposée entre la surface et la lentille de telle sorte que la lumière diffusée passe à travers l'ouverture et que la lumière de réflexion secondaire de la lumière diffusée est bloquée et ne peut pas pénétrer dans le capteur d'image.

**2.** Dispositif de capture de granularités laser selon la revendication 1, comprenant en outre une ouverture secondaire disposée sur le côté de l'ouverture faisant face à la surface, dans lequel l'ouverture secondaire et l'ouverture limitent le champ de vision du capteur d'image.

**3.** Dispositif de capture des granularités laser selon la revendication 1, dans lequel l'élément de restriction de la lumière est une microlentille disposée devant le capteur d'image pour réaliser les granularités laser sur le capteur d'image et pour que les lumières diffusées produisent les lumières diffractées.

**4.** Dispositif de capture de granularités laser selon la revendication 1, comprenant en outre une plaque de blocage de la lumière reliée à la microlentille pour bloquer une lumière diffusée inutile.

**5.** Dispositif de capture de granularités laser selon la revendication 1, comprenant en outre un système de lentilles disposé devant la source lumineuse destiné à convertir la lumière extrêmement cohérente en un faisceau collimaté.

**6.** Dispositif de capture de granularités laser selon la revendication 1, comprenant en outre une unité de réduction de faisceau qui est une lentille convergente disposée devant la source lumineuse destinée à faire converger la lumière extrêmement cohérente en un faisceau convergent.

7. Dispositif de capture de granularités laser selon la revendication 6, comprenant en outre une unité de réduction de faisceau destinée à réduire le diamètre du faisceau de lumière extrêmement cohérente émise par la source lumineuse.

8. Dispositif de capture des granularités laser selon la revendication 6, dans lequel l'unité de réduction de faisceau présente une première lentille convergente et une deuxième lentille convergente, la première lentille convergente et la deuxième lentille convergente sont agencées en une structure homofocale pour réduire le diamètre du faisceau de la lumière extrêmement cohérente.

9. Dispositif de capture de granularités laser selon la revendication 6, dans lequel l'unité de réduction de faisceau présente une première lentille et une troisième lentille dont les points focaux coïncident et la troisième lentille est une lentille divergente de telle sorte que le diamètre du faisceau de lumière extrêmement cohérente est réduit.

10. Souris optique, comprenant :

une source lumineuse, qui émet un faisceau de lumière extrêmement cohérente destiné à être projeté sur une surface pour produire des lumières diffusées ;
un élément de restriction de la lumière avant destiné à faire passer la lumière diffusée à travers l'élément de restriction de la lumière avant et à ce qu'une lumière de réflexion secondaire de la lumière diffusée soit bloquée et ne puisse pas émettre dans le capteur d'image ;
un élément de restriction de la lumière, qui produit au moins une des lumières diffractées à partir des lumières diffusées de telle sorte que les lumières diffractées interfèrent les unes avec les autres pour produire des granularités laser ;
un capteur d'image, qui reçoit les lumières diffractées et génère une première image de granularité laser avant le mouvement du capteur d'image et une seconde image de granularité laser après le déplacement du capteur d'image par rapport à la surface ; et
une unité de traitement, qui reçoit et compare la première image de granularité laser et la seconde image de granularité laser pour déterminer la direction et la distance du déplacement de l'élément de restriction de la lumière et du capteur d' image ;
dans lequel l'élément de restriction de la lumière se compose d'une ouverture et d'une lentille, l'ouverture étant disposée devant la lentille de sorte que les lumières diffusées passent à travers l'ouverture pour produire les lumières diffractées, qui interfèrent les unes avec les autres pour produire les granularités laser qui forment une image sur le capteur d'image ; et
moyennant quoi l'élément de restriction de la lumière avant est une ouverture et l'ouverture est disposée entre la surface et la lentille de telle sorte que la lumière diffusée passe à travers l'ouverture et que la lumière de réflexion secondaire de la lumière diffusée est bloquée et ne peut pas pénétrer dans le capteur d'image.

11. Souris optique selon la revendication 10, dans lequel l'élément de restriction de la lumière présente une ouverture et une lentille et l'ouverture est disposée entre la lentille et le capteur d'image de telle sorte que l'angle d'incidence de la lumière diffusée est limité par l'ouverture et que les lumières diffractées sont produites par les lumières diffusées, et que les lumières diffractées interfèrent les unes avec les autres pour produire les images de granularités laser dans le capteur d'image.

12. Procédé de capture de granularités laser, comprenant les étapes consistant à :

émettre un faisceau de lumière extrêmement cohérente ;
projeter la lumière extrêmement cohérente sur une surface pour produire des lumières diffusées ;
faire passer les lumières diffusées à travers un élément de restriction de la lumière avant et une lumière de réflexion secondaire de la lumière diffusée étant bloquée et ne pouvant pas être projetée sur le capteur d'image ;
faire passer les lumières diffusées à travers un second élément de restriction de la lumière, qui est une association d'une ouverture et d'une lentille, pour générer au moins une des lumières diffractées ; et
permettre aux lumières diffractées d'interférer les unes avec les autres pour générer des granularités laser ; et
enregistrer les images des granularités laser ;
**caractérisé en ce que** l'étape consistant à projeter une lumière extrêmement cohérente sur une surface pour produire une pluralité de lumières diffusées, est suivie d'une étape consistant à faire passer les lumières diffusées à travers une ouverture secondaire de telle sorte que la taille des granularités laser est agrandie et que l'association de l'ouverture secondaire et de l'élément de restriction de la lumière limite le champ de vision du capteur d'image ;
moyennant quoi l'élément de restriction de la lumière avant est une ouverture et l'ouverture est disposée entre la surface et la lentille de telle sorte que la lumière diffusée passe à travers l'ouverture et que la lumière de réflexion secondaire de la lumière diffusée est bloquée et ne peut pas pénétrer dans le capteur d'image.

**13.** Procédé de capture de granularités laser selon la revendication 12, dans lequel l'étape consistant à enregistrer les images du motif de granularités laser, est suivie d'une étape consistant à déterminer le mouvement de la granularité laser en comparant les images de motif successives qui sont générées au cours du mouvement relatif du capteur d'image et de la surface.

**14.** Procédé de capture de granularités laser selon la revendication 13, dans lequel l'étape consistant à émettre un faisceau de lumière extrêmement cohérente est suivie d'une étape consistant à réduire le diamètre de la lumière extrêmement cohérente.

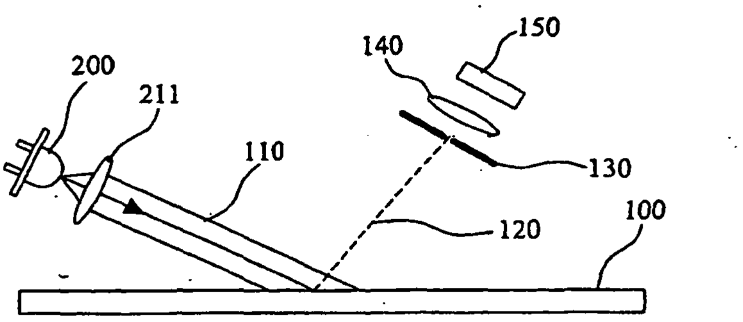


FIG.1A

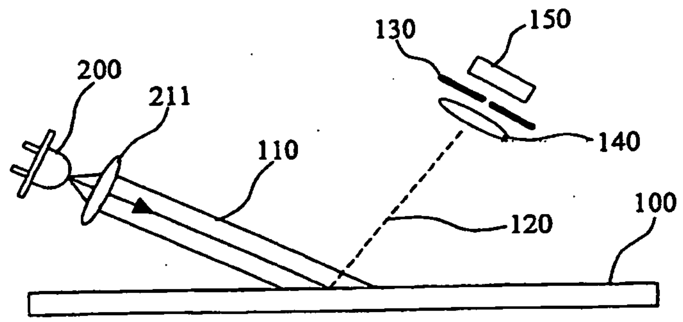


FIG.1B

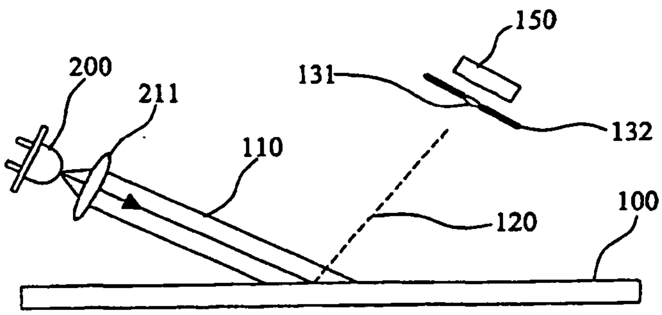


FIG.1C

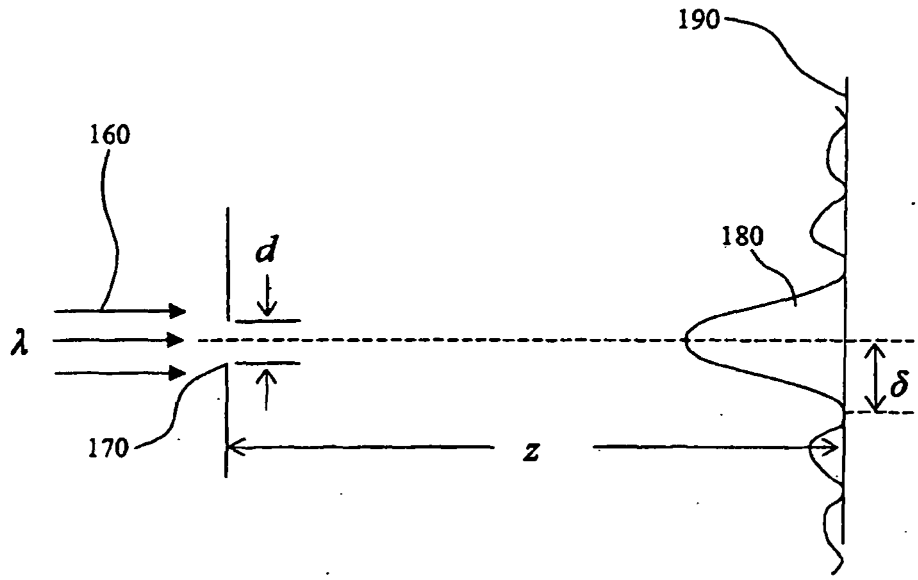


FIG.2

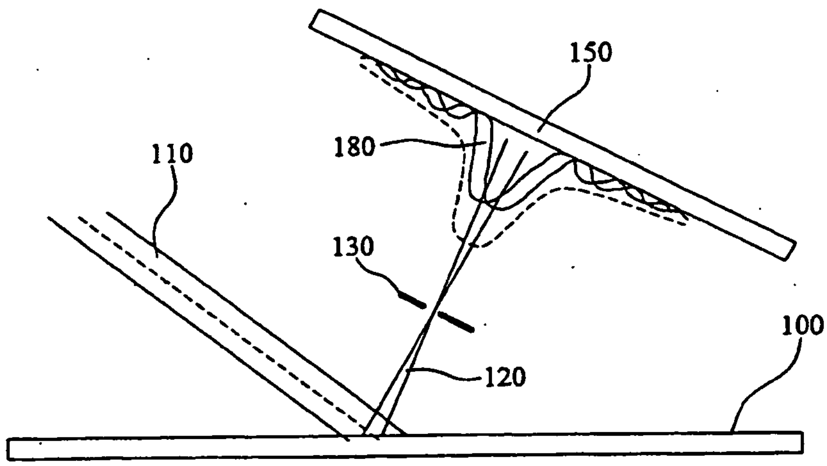


FIG.3

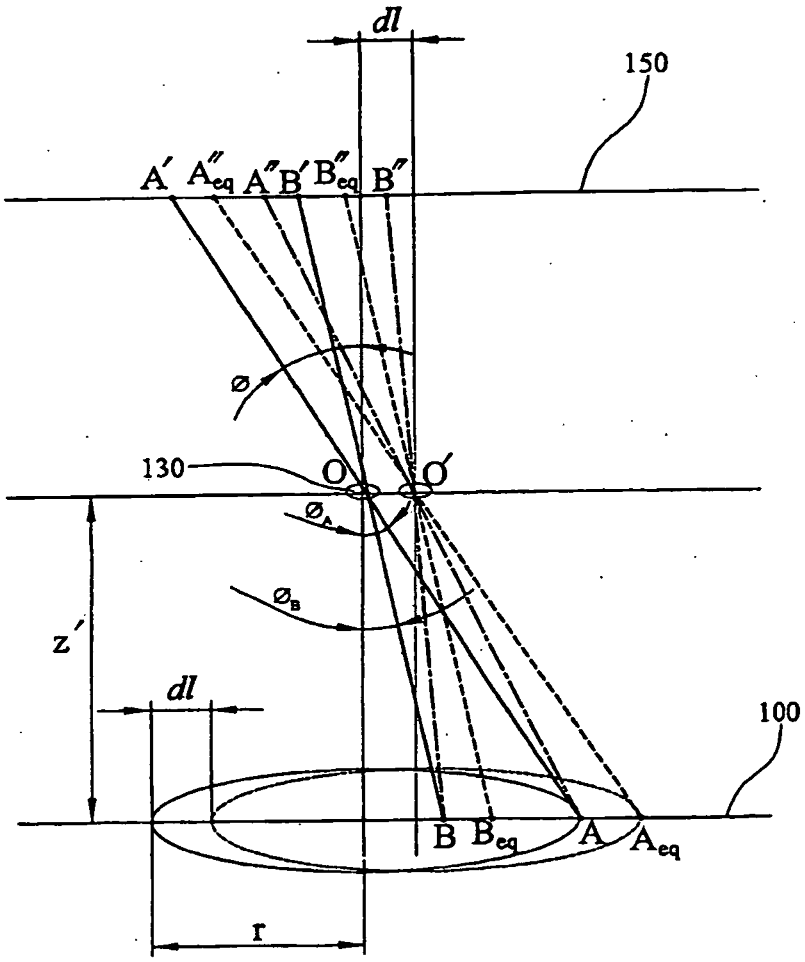


FIG.4

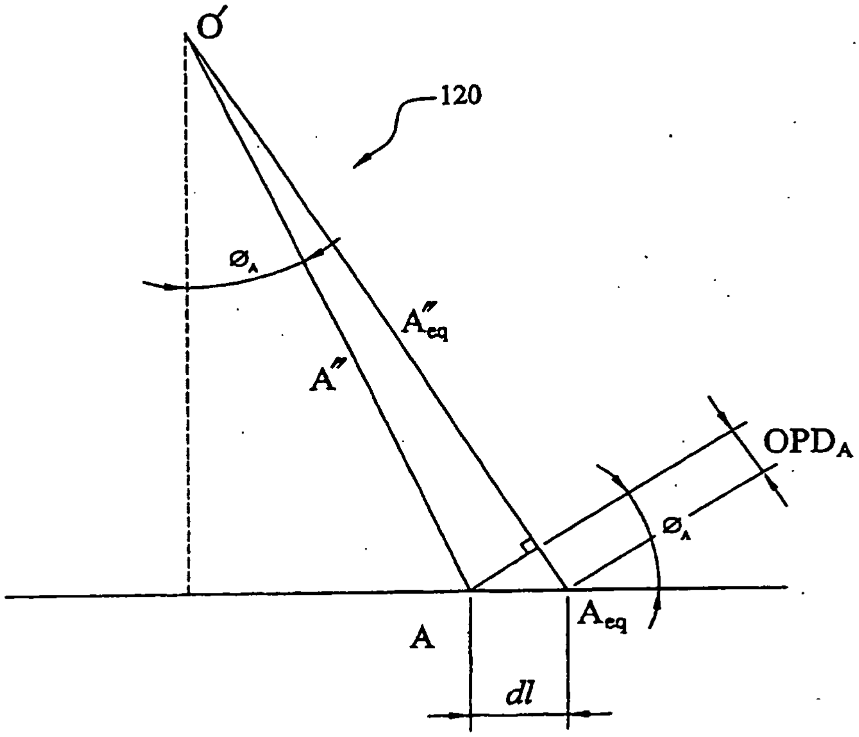


FIG.5A

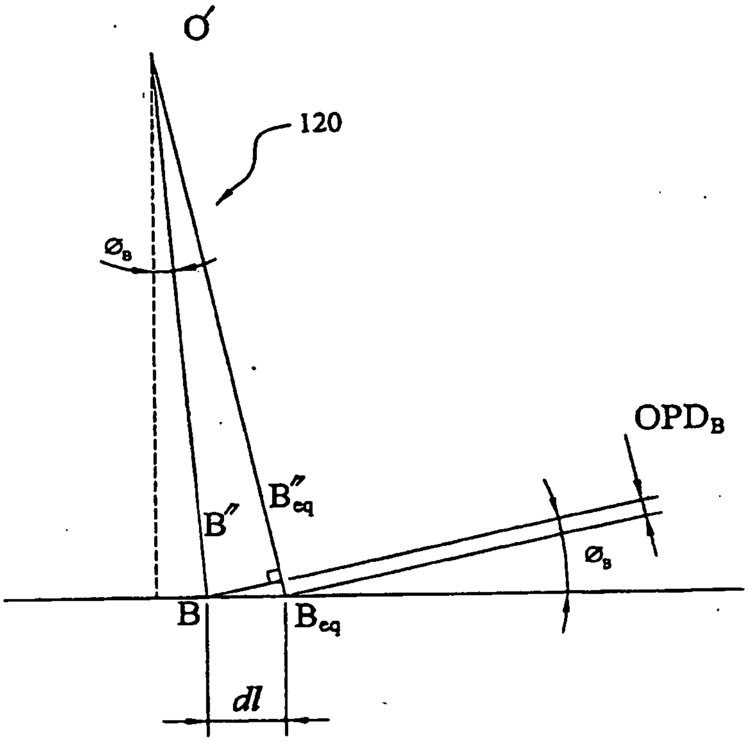


FIG.5B

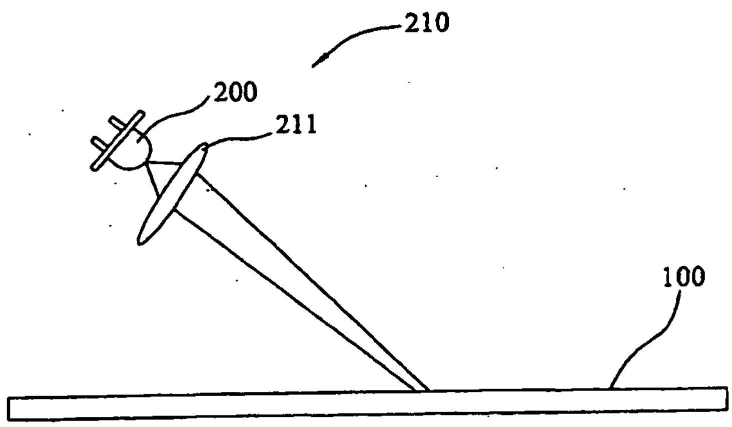


FIG.6A

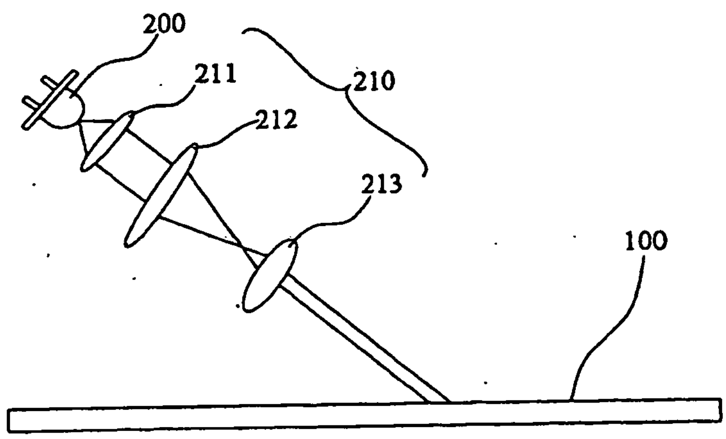


FIG.6B

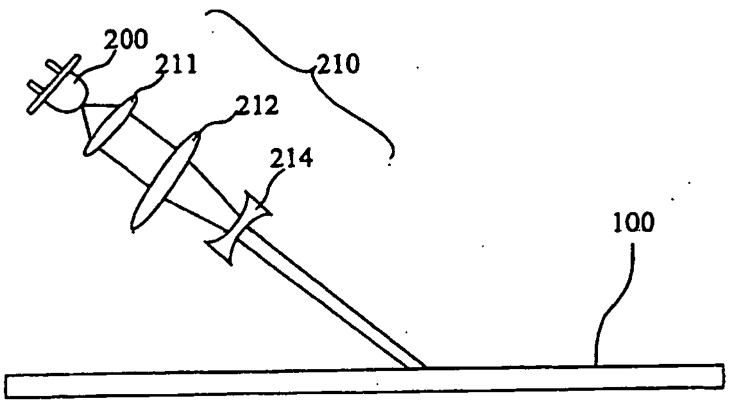


FIG.6C

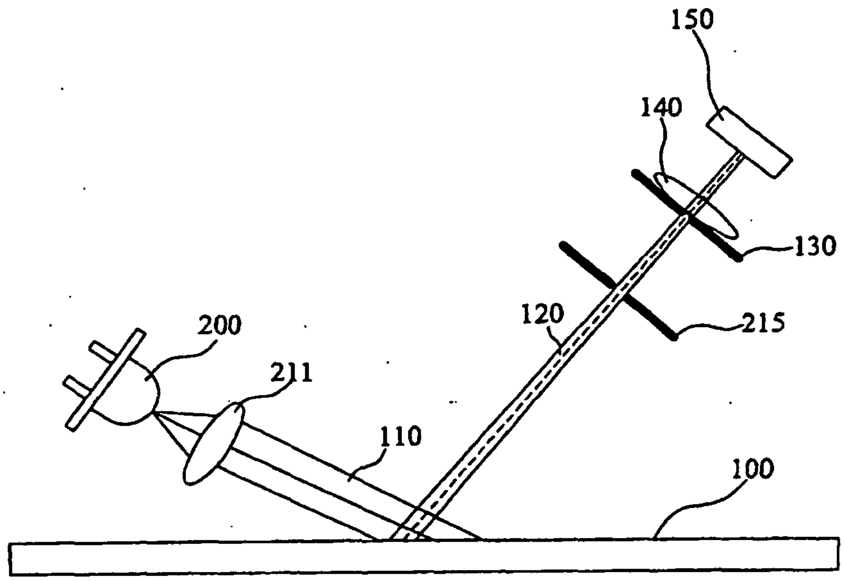


FIG.7A

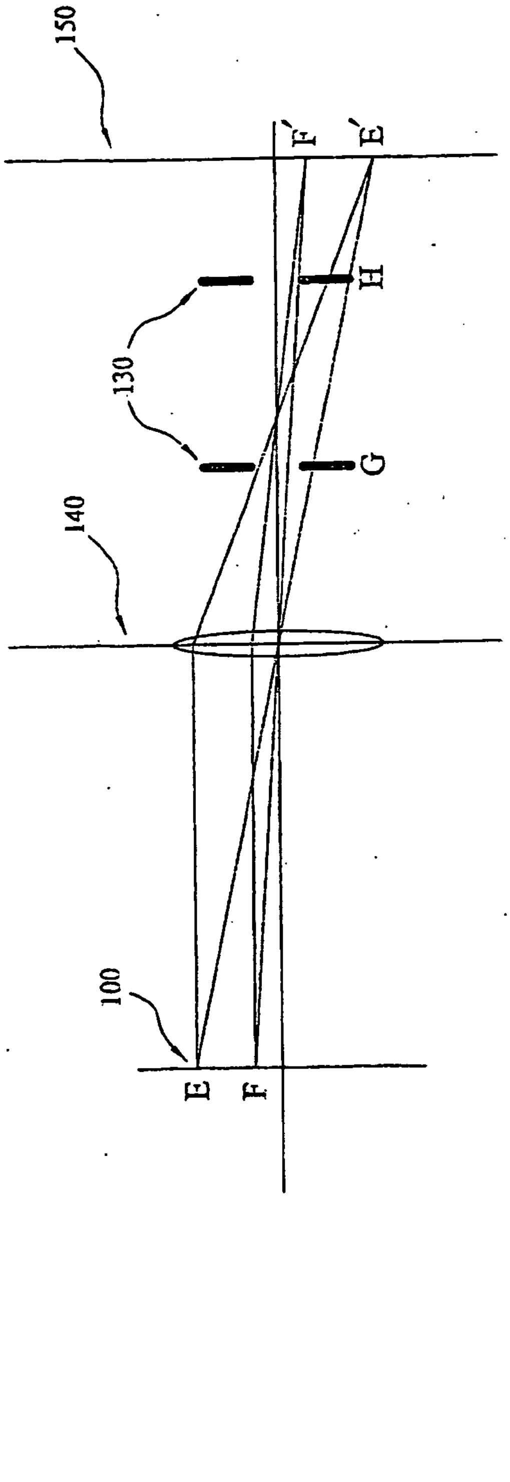


FIG.7B

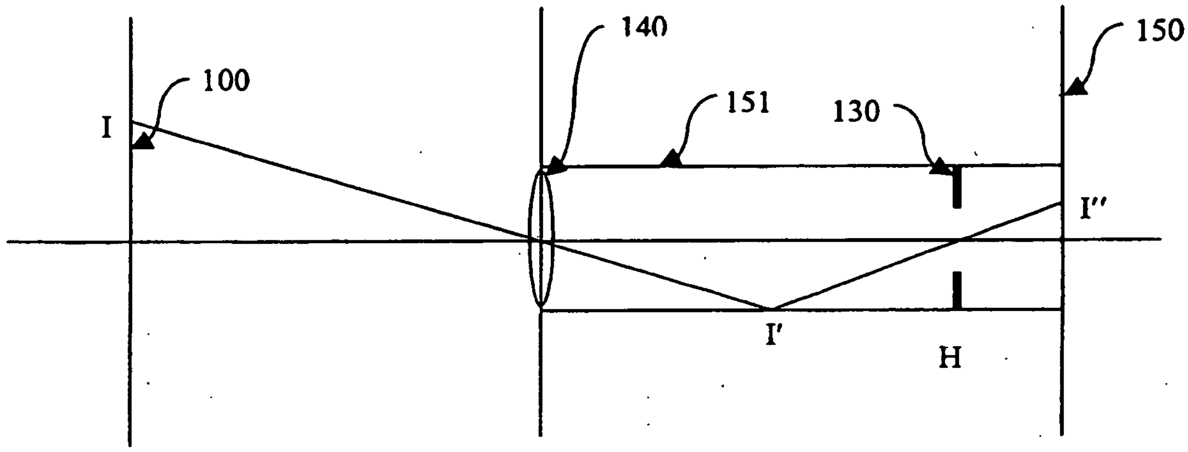


FIG.7C

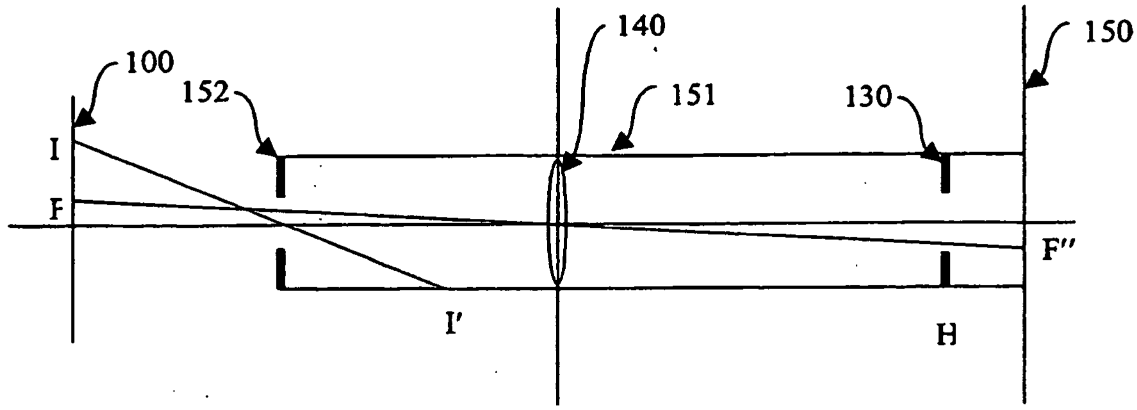


FIG.7D

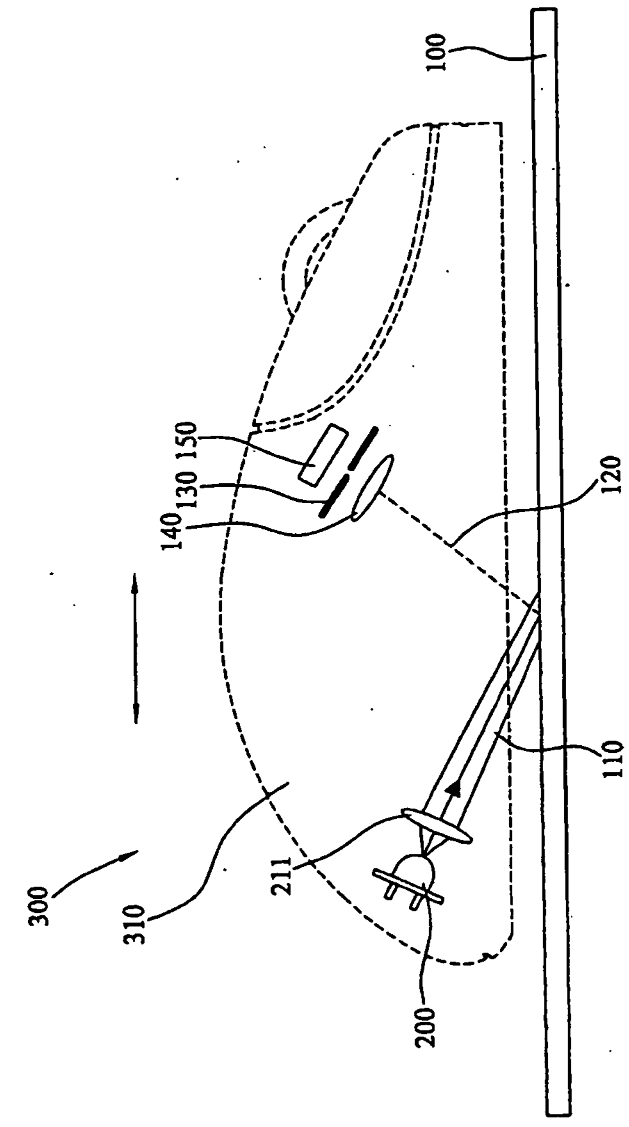


FIG.8A

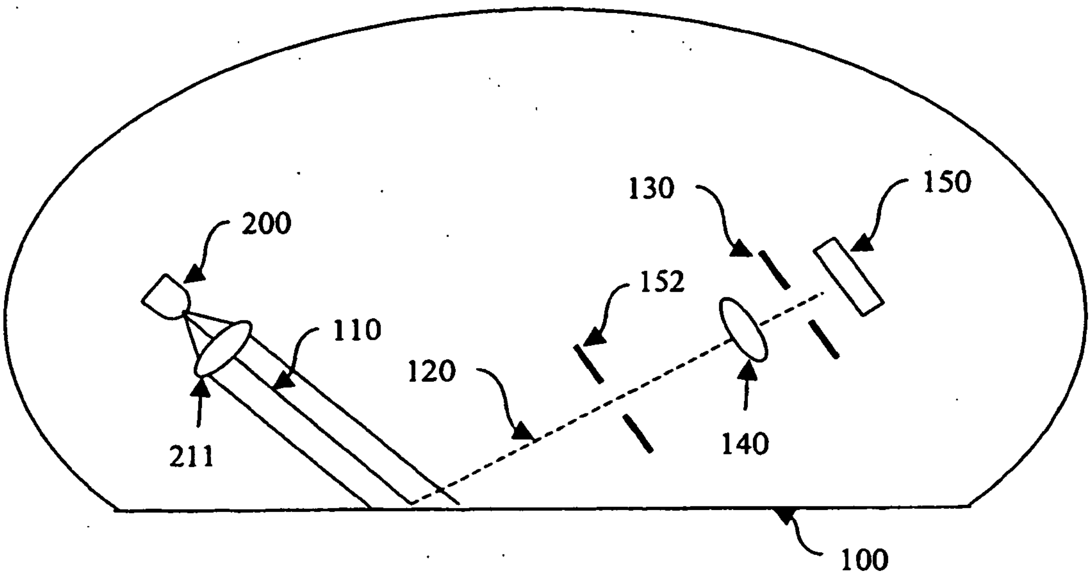


FIG.8B

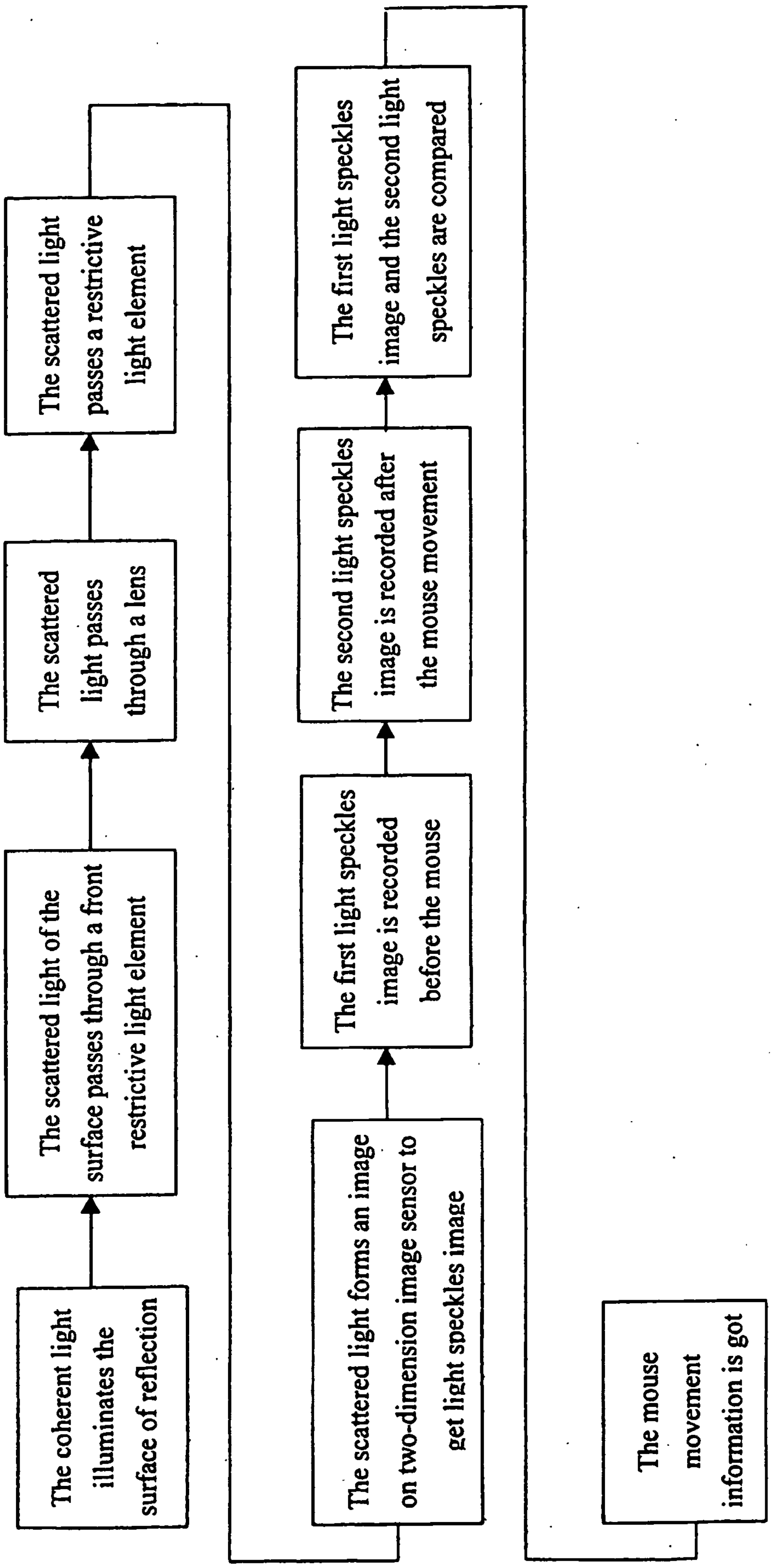
The coherent light illuminates the surface of reflection
The scattered light of the surface passes through a front restrictive light element
The scattered light passes through a lens
The scattered light passes a restrictive light element
The scattered light forms an image on two-dimension image sensor to get light speckles image
The first light speckles image is recorded before the mouse
The second light speckles image is recorded after the mouse movement
The first light speckles image and the second light speckles are compared
The mouse movement information is got

FIG. 8C

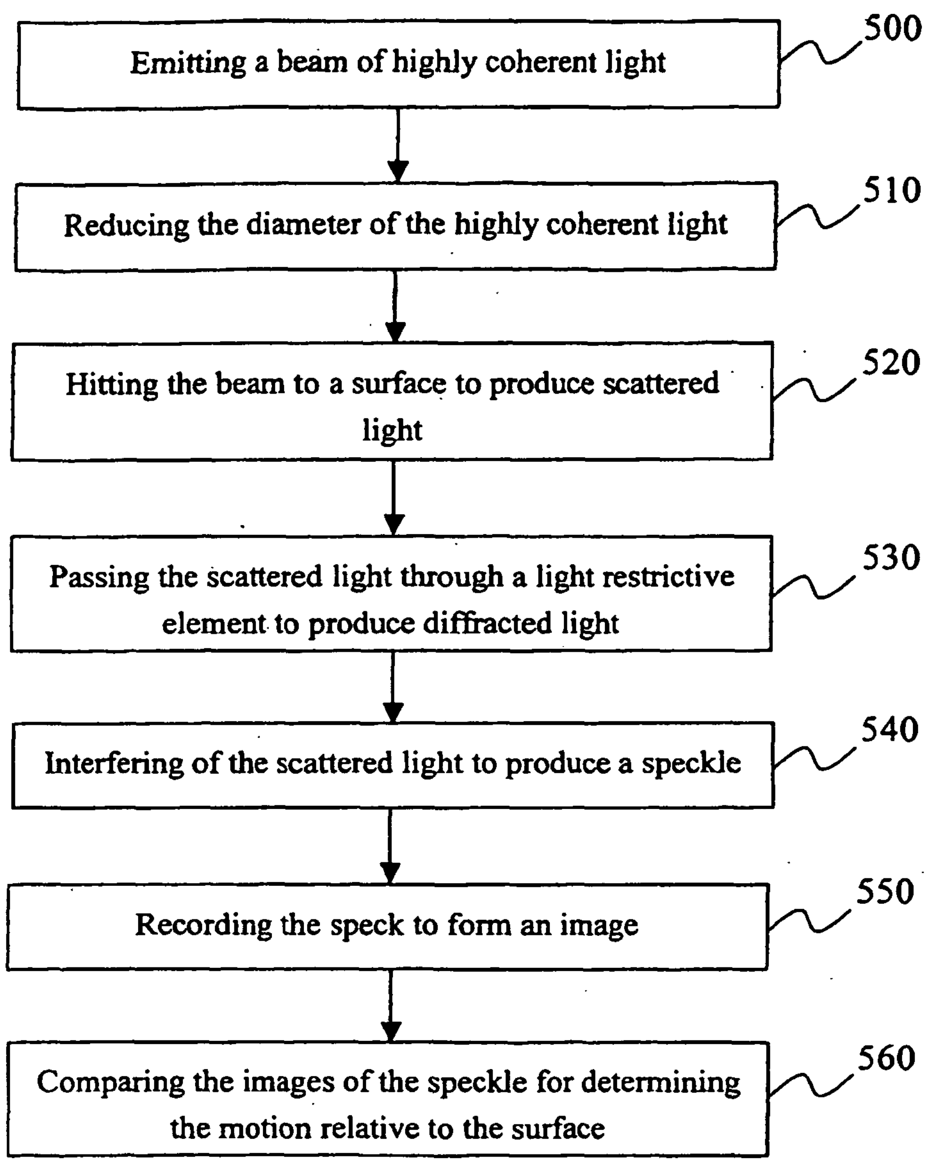
Emitting a beam of highly coherent light
500
Reducing the diameter of the highly coherent light
510
Hitting the beam to a surface to produce scattered light
520
Passing the scattered light through a light restrictive element to produce diffracted light
530
Interfering of the scattered light to produce a speckle
540
Recording the speck to form an image
550
Comparing the images of the speckle for determining the motion relative to the surface
560

FIG. 9A

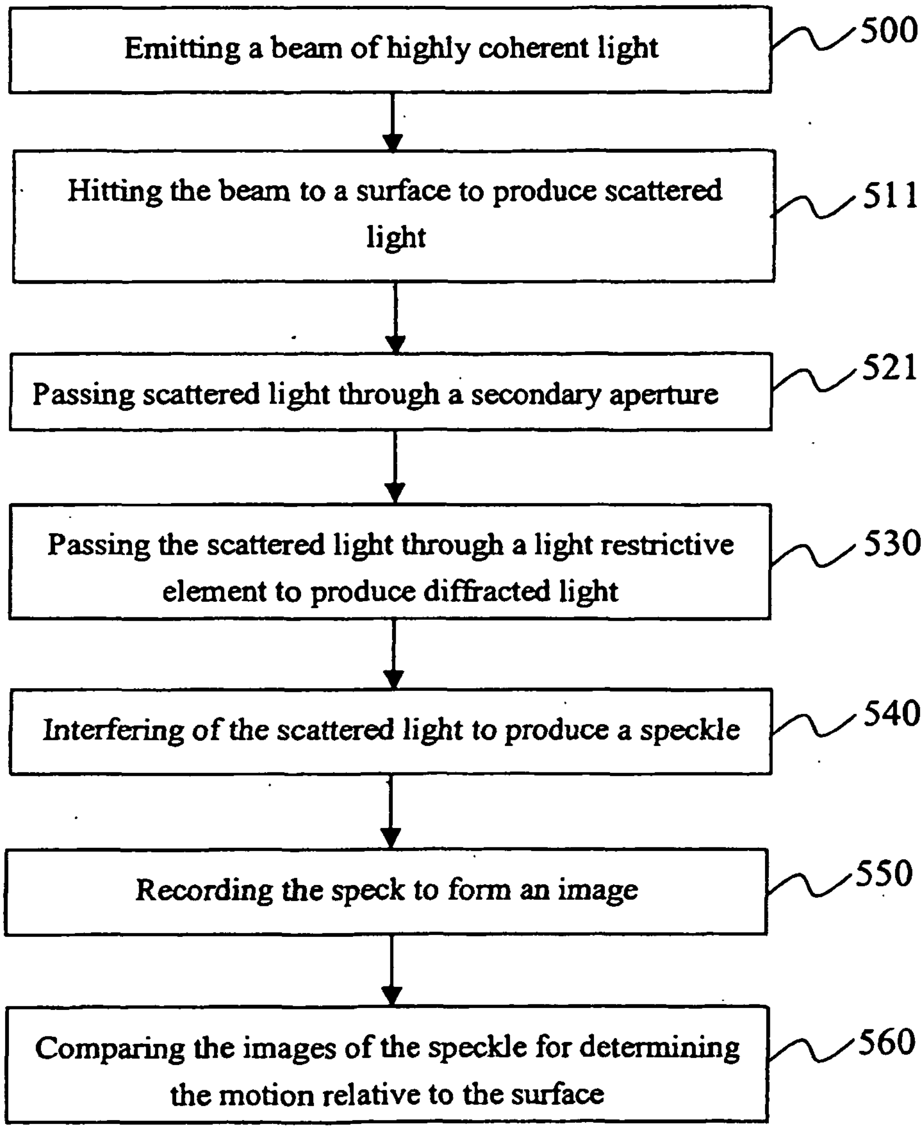
Emitting a beam of highly coherent light
500
Hitting the beam to a surface to produce scattered light
511
Passing scattered light through a secondary aperture
521
Passing the scattered light through a light restrictive element to produce diffracted light
530
Interfering of the scattered light to produce a speckle
540
Recording the speck to form an image
550
Comparing the images of the speckle for determining the motion relative to the surface
560

FIG. 9B

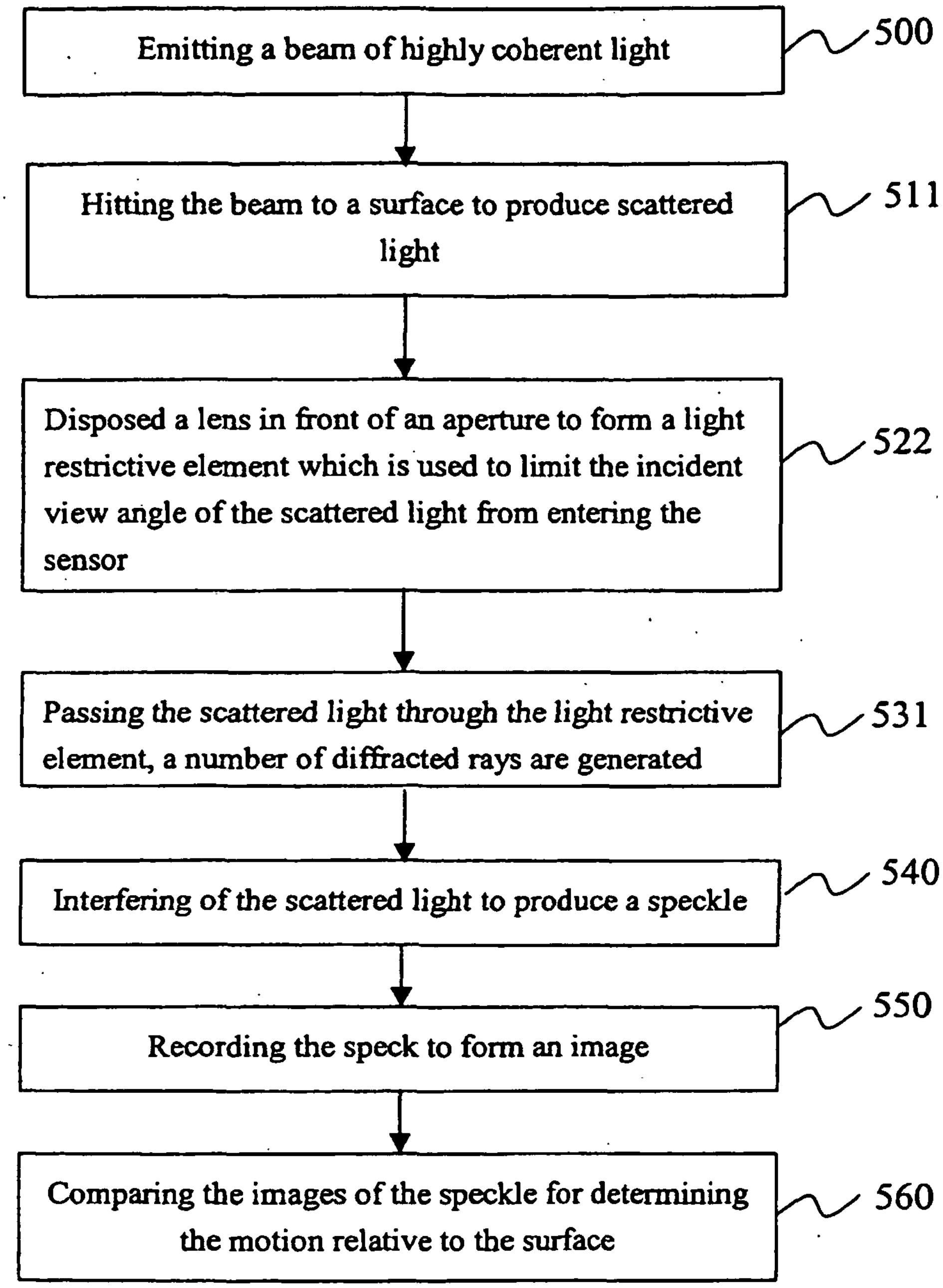
Emitting a beam of highly coherent light
500
Hitting the beam to a surface to produce scattered light
511
Disposed a lens in front of an aperture to form a light restrictive element which is used to limit the incident view angle of the scattered light from entering the sensor
522
Passing the scattered light through the light restrictive element, a number of diffracted rays are generated
531
Interfering of the scattered light to produce a speckle
540
Recording the speck to form an image
550
Comparing the images of the speckle for determining the motion relative to the surface
560

FIG. 9C

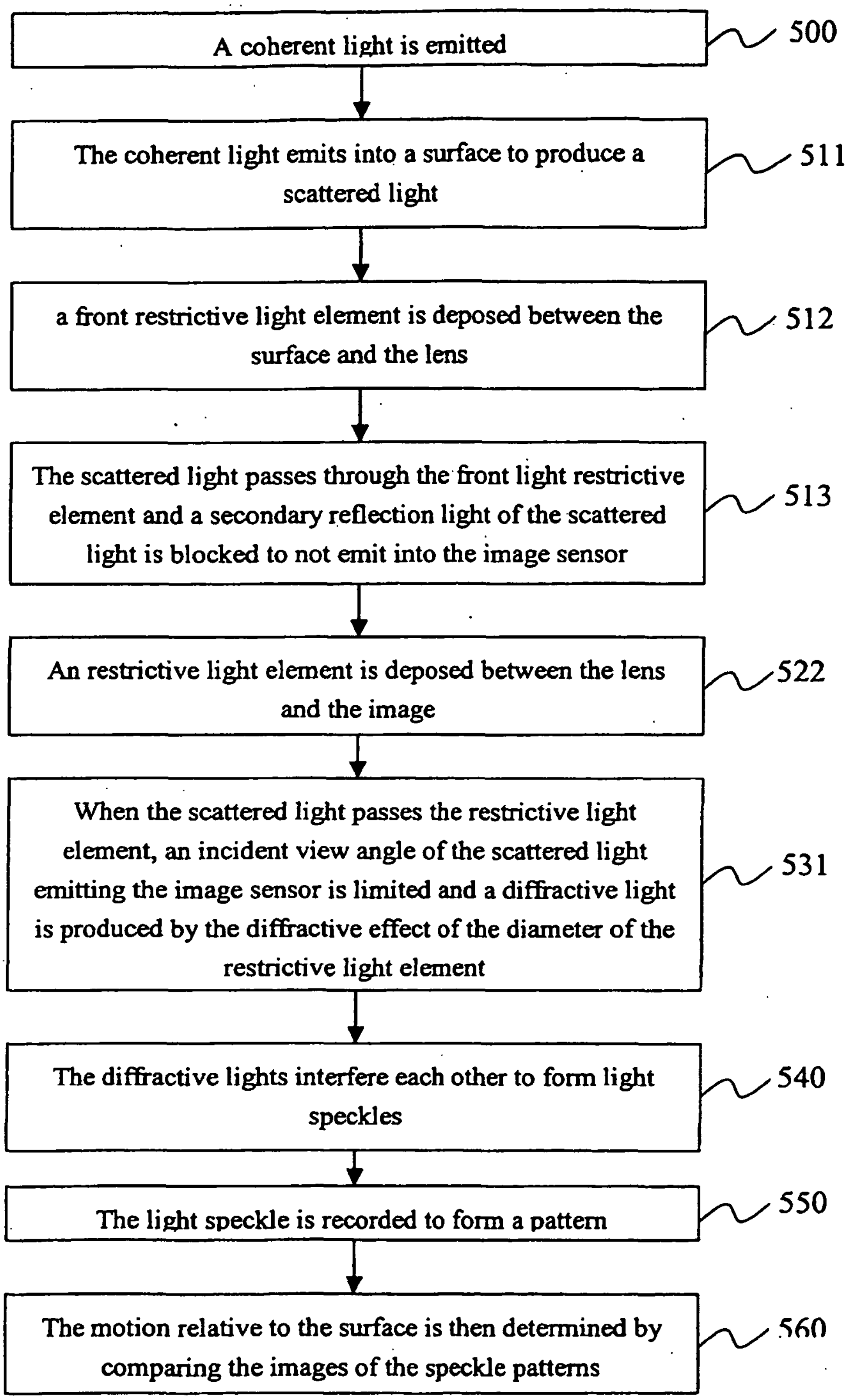
A coherent light is emitted
500
The coherent light emits into a surface to produce a scattered light
511
a front restrictive light element is deposed between the surface and the lens
512
The scattered light passes through the front light restrictive element and a secondary reflection light of the scattered light is blocked to not emit into the image sensor
513
An restrictive light element is deposed between the lens and the image
522
When the scattered light passes the restrictive light element, an incident view angle of the scattered light emitting the image sensor is limited and a diffractive light is produced by the diffractive effect of the diameter of the restrictive light element
531
The diffractive lights interfere each other to form light speckles
540
The light speckle is recorded to form a pattern
550
The motion relative to the surface is then determined by comparing the images of the speckle patterns
560

FIG.9D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050024623 A
- WO 2004075040 A